# EUROPÄISCHE PATENTSCHRIFT

(11) **EP 1 055 078 B1**
(45) Veröffentlichungstag und Bekanntmachung des Hinweises auf die Patenterteilung: **16.04.2003**
(21) Anmeldenummer: 99901563.9
(22) Anmeldetag: 08.02.1999
(51) Int. Cl.: F16K 25/00, F16K 27/04

(54) **HOCHDRUCK-HYDRAULIKVENTIL**
HIGH-PRESSURE HYDRAULIC VALVE
SOUPAPE HYDRAULIQUE HAUTE PRESSION

(30) Priorität: 20.02.1998 CH 41398
(43) Veröffentlichungstag der Anmeldung: 29.11.2000
(73) Patentinhaber: Bucher Hydraulics AG, 6345 Neuheim/Zug (CH)
(72) Erfinder: STAIGER, Hans, CH-6330 Cham (CH); KAHL, Horst, D-42897 Remscheid (DE); ESCHWEILER, Markus, D-42897 Remscheid (DE); LUDWIG, Jörg, D-42929 Wermelskirchen (DE)
(86) Internationale Anmeldenummer: CH9900057
(87) Internationale Veröffentlichungsnummer: WO99042751

(56) Entgegenhaltungen:
- EP-A- 0 711 944
- DE-A- 2 336 927
- US-A- 3 559 687
- US-A- 4 770 210
- US-A- 5 615 860

## Beschreibung

Die Erfindung bezieht sich auf ein Hochdruck-Hydraulikventil der im Oberbegriff des Anspruchs 1 genannten Art.

Solche Hochdruck-Hydraulikventile werden in verschiedenen Typen und Bauformen in mobilen hydraulischen Anlagen eingesetzt. Beispiele solcher unterschiedlichen Typen sind etwa Proportionalventile, Lasthalte-Bremsventile und Sperr-/Sicherheitsventile. Die mobilen hydraulischen Anlagen sind beispielsweise Bestandteile von Baggern, Kranen und anderen Hebeeinrichtungen. Bei solchen Anwendungen spielt das Gewicht der Hydraulik-Aggregate eine Rolle. Es soll möglichst gering sein.

Üblicherweise sind die Gehäuse von Hochdruck-Hydraulikventilen aus Grauguß oder Sphäroguß gefertigt und die inneren, teilweise beweglichen Teile aus vergütetem Stahl. Das Gewicht des Hochdruck-Hydraulikventils wird im wesentlichen durch das Gewicht dieses Gehäuses bestimmt. Aus der WO92/07208 ist ein solches Hochdruck-Hydraulikventil bekannt. Bei dem aus dieser Anmeldung hervorgegangenen US-A-5,556,075 ist als ein wesentlicher Effekt der Erfindung erwähnt, daß das Gewicht sehr niedrig ist. Deshalb wird nach beiden vorgenannten Anmeldungen vorgeschlagen, einen Teil der Ventilspindel oder die gesamte Ventilspindel/Ventilkegel-Anordnung aus einem weichen Material wie Kupfer, Messing oder insbesondere Aluminium herzustellen. Dadurch soll die Dichtigkeit verbessert werden. Im Falle der Verwendung von Aluminium wird zwar eine Gewichtsreduktion erreicht, jedoch ist diese angesichts eines in seiner Masse überwiegenden Gehäuses nur minimal. Eine Gewichtsreduktion für die Ventilspindel/Ventilkegel-Anordnung führt auch zu einer geringeren trägen Masse und somit zu einem geringeren dynamischen Druckverlust bei periodischem Schalten. Wegen des schon erwähnten Umstands, daß der Gewichtsanteil der Ventilspindel/Ventilkegel-Anordnung nur einen kleinen Anteil des Gesamtgewichts darstellt, ist die Gewichtsersparnis für das Hochdruck-Hydraulikventil an sich nicht sehr bedeutend. Zudem besteht das Problem der unterschiedlichen Wärmeausdehnungskoeffizienten der unterschiedlichen Materialien.

Aus US-A-3,559,687 ist ein Ventil bekannt, dessen Gehäuse aus der Aluminium-Legierung 6061-T6 besteht. Bei diesem Ventil handelt es sich um eines für gasförmige Medien, bei denen die Betriebsdrücke im Bereich 6 bis 8 bar liegen.

Das Bestreben, Maschinenbauteile möglichst leicht auszuführen, besteht seit langer Zeit. So sind auf sehr vielen Gebieten der Technik Leichtbauwerkstoffe seit langer Zeit angewendet worden. Als Beispiel dafür sei erwähnt, daß auch bei dem Personenverkehr dienenden Kraftfahrzeugen solche leichten Werkstoffe wie Titan und Aluminium angewendet werden. Dies ist beispielsweise aus US-A-5,169,460 bekannt. Da, wie gesagt, das Bestreben zur Reduzierung des Gewichts schon lange Zeit ein Bedürfnis dargestellt hat, kann der Schluß gezogen werden, daß auf den Technikgebieten, auf denen solche leichten Werkstoffe noch keine Anwendung gefunden haben, gewichtige Argumente vorhanden sind, die die Verwendung solcher Werkstoffe ausschließen.

Der Erfindung liegt die Aufgabe zugrunde, das Gewicht eines Hochdruck-Hydraulikventils weiter deutlich abzusenken, ohne dabei die Gebrauchstüchtigkeit nachteilig zu verändern. Vorteilhafte Weiterbildungen ergeben sich aus den abhängigen Ansprüchen.

Das Gesamtgewicht eines Hochdruck-Hydraulikventils wird maßgebend durch dessen Gehäuse bestimmt. Dabei spielen einerseits formgebundene Daten wie Größe und Wandstärke eine bedeutende Rolle, andererseits das spezifische Gewicht des verwendeten Materials. Die Größe des Gehäuses wird beispielsweise durch die Größe des zu steuernden Durchflusses beeinflußt, ebenso auch durch die mit der Funktionsweise zusammenhängende konstruktive Gestaltung. Auch der maximale Druck, den das Hochdruck-Hydraulikventil zu beherrschen hat, hat einen bestimmenden Einfluß auf die

Gehäusegröße, beispielsweise auf die minimale Dicke von Wandungen. Hydraulische Anlagen, die als Hochdruck-Anlagen zu qualifizieren sind, sind durch Betriebsdrücke von mehr als 100 bar gekennzeichnet. Bekannt sind Anlagen mit einem Nenn-Betriebsdruck von 420 bar. Dabei ist noch zu beachten, daß gerade bei mobilen Anlagen wie Kranen und Baggern durchaus auch Lastspitzen auftreten können, die den Nenn-Betriebsdruck überschreiten. Zwar sind in der Regel Sicherheitseinrichtungen vorhanden, die größere Lasten verhindern sollen, doch können auch in solchen Fällen dynamische Lastspitzen auftreten. Der Hersteller von Hochdruck-Hydraulikventilen muß daher den Nachweis erbringen, daß die Funktion und Haltbarkeit des Aggregats auch bei einem Vielfachen, beispielsweise dem Vierfachen, des Nenn-Betriebsdrucks gewährleistet ist.

Im Gegensatz zum erprobten Stand der Technik, bei dem Grauguß oder vorzugsweise Sphäroguß GGG 40 als Gehäusewerkstoff und gehärteter Stahl für die inneren Teile Verwendung findet, wird ertindungsgemaß vorgeschlagen, als Gehäusewerkstoff eine vergütete Aluminium-Knetlegierung, etwa AlZnMgCu, zu verwenden. Da das spezifische Gewicht einer solchen Legierung etwa 2,8 g/cm³ beträgt, während jenes von Sphäroguß GGG 40 einen Wert von 7,25 g/cm³ aufweist, läßt sich für das Gewicht des Gehäuses, gleiche Dimensionierung vorausgesetzt, eine Gewichtseinsparung von etwa 60 % erzielen.

Vielfach werden Gehäuseteile für Hochdruck-Hydraulikventile nicht aus Formgußstücken hergestellt, sondern aus massiven Blöcken. Dies einerseits deshalb, weil die Stückzahlen so gering sind, daß sich die Herstellung von Formen und Formkernen für die inneren Hohlräume wegen der hohen Kosten verbietet, andererseits auch deshalb, weil mehrere Teile oftmals als anreihbare Elemente zu größeren Aggregaten vereinigt werden. Hier bietet es Vorteile, wenn die Gehäuse quaderförmige Gestalt haben. Bei solchen quaderförmigen Gehäusen ist der in Kilogramm pro Bauteil ausgedrückte absolute Gewichtsvorteil durch die Verwendung einer vergüteten Aluminium-Legierung anstelle von Sphäroguß GGG 40 besonders bedeutend.

Die mechanischen Kenndaten der vorgenannten Werkstoffe, etwa Zugfestigkeit, Brinellhärte, Elastizitätsmodul und 0,2%-Dehngrenze, sind seit langem bekannt. Obwohl beispielsweise die Zugfestigkeit und die 0,2 %-Dehngrenze von vergüteten Aluminium-Legierungen höher sind als die entsprechenden Kennwerte von Sphäroguß GGG 40, hat sich die Fachwelt bislang gescheut, vergütete Aluminium-Legierungen als Werkstoff für die Gehäuse von Hochdruck-Hydraulikventilen zu verwenden.

Der erfindungsgemäßen Lösung stand offensichtlich auch im Wege, daß die Verschleißfestigkeit von Sphäroguß GGG 40 als außerordentlich hoch angesehen wird, während Aluminium-Legierungen allgemein als nicht besonders abriebfest gelten. Dieser Aspekt hat aber, wie Versuche gezeigt haben, bei hydraulischen Vorrichtungen nicht die überragende Bedeutung, weil das in solchen Vorrichtungen vorhandene Hydrauliköl bei gleitender Beanspruchung als Schmiermittel wirkt. Als vorteilhafte Ausgestaltung der Erfindung kann aber eine Oberflächenbehandlung der Bauteile aus der Aluminium-Legierung durchgeführt werden, bevorzugt eine anodische Oxidation. Solche Verfahren sind an sich schon seit langer Zeit bekannt. Ein für den vorgesehenen Zweck vorteilhaftes Verfahren ist das als HART-COAT®-Verfahren (Warenzeichen der Firma AHC-Oberflächentechnik, Friebe & Reininghaus GmbH) bekannte Erzeugen einer Schicht mit vergleichsweise sehr geringem Porenvolumen. Bei diesem Verfahren findet die anodische Oxidation in einem speziell zusammengesetzten sauren Elektrolyten ab, die während des Verfahrens gekühlt wird.

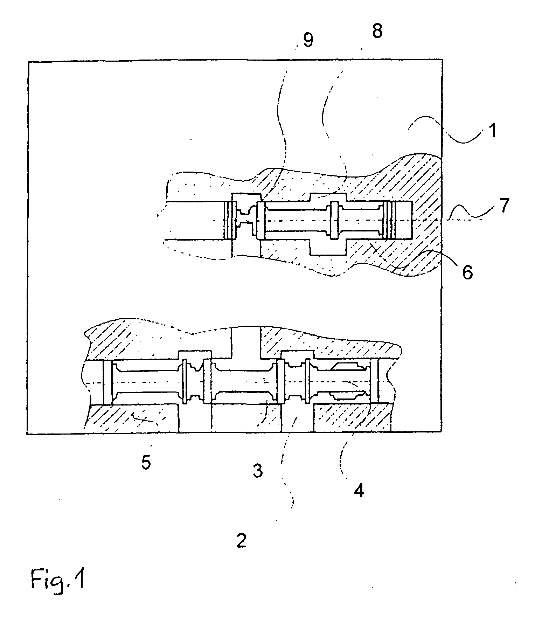

Nachfolgend wird ein Ausführungsbeispiel der Erfindung anhand der Zeichnung näher erläutert. Die einzige Figur zeigt einen schematischen Teilschnitt eines Hochdruck-Hydraulikventils. Mit der Bezugszahl 1 ist ein Gehäuse dargestellt, das quaderförmige Gestalt hat. Erfindungsgemäß besteht dieses Gehäuse 1 aus einer vergütbaren Aluminium-Knetlegierung, beispielsweise des Typs AlZnMgCu. Im Inneren des Gehäuses 1 befinden sich Hohlräume, in den sich funktionelle Bauteile befinden. Die Hohlräume sind beispielsweise durch Bohren und/oder Fräsen aus dem Block herausgearbeitet. So weist das Hochdruck-Hydraulikventil zwei Anschlüsse 2 auf, von denen der eine über eine nicht dargestellte Hydraulikleitung mit der ebenfalls nicht dargestellten hydraulischen Last, beispielsweise einem hydraulischen Stellantrieb, verbunden ist. Der andere Anschluß führt über eine ebensolche Hydraulikleitung zu einer gleichfalls nicht dargestellten Pumpe.

Beim in der Figur dargestellten Hochdruck-Hydraulikventil handelt es sich um ein Modul, das neben einem Proportional-Wegeventil und einer 2-Wege-Druckwaage noch andere Elemente enthält, die aber hier nicht dargestellt sind, weil sie nicht erfindungswesentlich sind. Solche anderen Elemente sind beispielsweise Einstellorgane für Maximaldruck, für Maximalhub und für Druckdifferenz.

Als funktionelle Bauteile, die innerhalb des Gehäuses 1 angeordnet sind, und die den Strom des Hydrauliköls beeinflussen, sind aus der Figur erkennbar: ein Hauptsteuerkolben 3, der längs seiner Achse 4 in einer ersten Kammer 5 verschiebbar angeordnet ist, und ein Druckwaagekolben 6, der längs seiner Achse 7 in einer weiteren Kammer 8 verschiebbar angeordnet ist. Dabei kann der Druckwaagekolben 6 mit einem Teil der Wandung der Kammer 8 ein Rückschlagventil 9 bilden. Die vorgenannten Elemente bestimmen die Funktionsweise des Hochdruck-Hydraulikventils. Auf sie wird hier aber weiter nicht eingegangen, da die Funktionsweise nicht erfindungswesentlich ist.

Bei solchen Hochdruck-Hydraulikventilen nach dem Stand der Technik bestehen die funktionellen Teile wie Hauptsteuerkolben 3 und Druckwaagekolben 6 aus gehärtetem Stahl. Dabei findet die Härtung am Schluß des Herstellungsvorgangs statt. Weil aber bei der Wärmebehandlung, insbesondere auch bei spanabhebend verarbeiteten Teilen, als Verzug bezeichnete Maßänderungen auftreten, ist regelmäßig Nacharbeit nötig, um die im Hinblick auf die Funktion geforderte Maßgenauigkeit der Teile zu erreichen.

Bestehen die funktionellen, auf den Strom des Hydrauliköls Einfluß nehmenden Teile wie Hauptsteuerkolben 3 und Druckwaagekolben 6 aus gehärtetem Stahl, während das Gehäuse 1 aus einer Aluminium-Knetlegierung besteht, so ist für die Auslegung der Konstruktion und die Maße und Toleranzen der Teile zu berücksichtigen, daß die thermischen Ausdehnungskoeffizienten von Stahl und Aluminiumlegierungen deutlich verschieden sind, nämlich bei Stahl etwa 12 x 10⁻⁶/°C und bei Aluminiumlegierungen etwa doppelt so hoch, nämlich 23 bis 24 x 10⁻⁶/°C. Bei stationär betriebenen Hydraulik-Anlagen spielt dieser Unterschied keine bedeutende Rolle, wenn die Anlage beispielsweise innerhalb einer Werkhalle aufgestellt ist. Bei Hydraulik-Einrichtungen aufweisenden mobilen Anlagen wie Kranen und Baggern treten aber wegen der Benutzung dieser Einrichtungen im Freien durchaus beachtenswerte Temperaturunterschiede infolge wechselnder meteorologischer Bedingungen auf Bei der Auslegung der Teile sind also die auftretenden maximalen Temperaturwerte zu berucksichtigen. Das ist an sich beherrschbar, zumal sich die Temperatur auch auf die Eigenschaften des Hydrauliköls auswirkt, so daß der Konstrukteur des Hochdruck-Hydraulikventils die Temperatureinflüsse ohnehin zu berücksichtigen hat.

Es ist jedoch vorteilhaft, wenn die funktionellen Teile wie Hauptsteuerkolben 3 und Druckwaagekolben 6 ebenfalls aus einer vergütbaren Aluminium-Knetlegierung wie AlZnMgCu bestehen. Damit treten bei vom Normalen abweichenden Temperaturen keinerlei zusätzliche Probleme mit Toleranzen auf, die berücksichtigt werden müßten.

Vorteilhaft ist es, wenn der vor der zur Bearbeitung zum Gehäuse 1 vorliegende Rohling, beispielsweise ein quaderförmiger Korper, schon im vergüteten Zustand vorliegt. Die Bearbeitung zum fertigen Gehäuse 1 erfolgt also im bereits vergüteten Zustand. Das hat eine Reihe vor Vorteilen: Einerseits benotigt der Hersteller der Teile keine zum Verguten des Material geeignete Wärmebehandlungsanlage Andererseits treten durch das Verguten bedingte Maßänderungen am fertig bearbeiteten Gehäuse 1 nicht mehr auf. Ein ganz besonders wesentlicher Vorteil resultiert aber daraus, daß die spanabhebende Bearbeitung erleichtert ist. Aluminium-Werkstoffe sind allgemein als weich und zah bekannt Das erfordert speziell geschliffene spanabhebende Werkzeuge und führt trotzdem sehr haufig zur Bildung von sogenannten Aufbauschneiden, was sich auch ungünstig auf die Maßhaltigkeit auswirkt. Es hat sich gezeigt, daß bei der Bearbeitung im vergüteten Zustand die Schnittbedingungen wesentlich günstiger sind. So kann mit Schnittgeschwindigkeiten gearbeitet werden, die jene bei Grauguß sogar noch übertreffen können. Daraus folgt eine besonders wirtschaftliche Fertigung.

Das für die Herstellung des Gehäuses 1 Gesagte gilt in gleicher Weise für die vorteilhaft ebenfalls aus einer vergütbaren Aluminium-Knetlegierung herzustellenden funktionellen Teile wie Hauptsteuerkolben 3 und Druckwaagekolben 6.

Im Anschluß an die Herstellung der Teile die Gehäuse 1, Hauptsteuerkolben 3, Druckwaagekolben 6 und dergleichen erfolgt vorteilhaft die anodische Oxidation der Teile. Zu berücksichtigen ist dabei, daß der Schichtaufbau bei der anodischen Oxidation eine Maßänderung bewirkt. Von der Oberfläche her werden Aluminiumatome in Aluminiumoxid-Moleküle umgewandelt. Die Schicht wächst damit einerseits in die Tiefe, führt aber andererseits auch zu einer Maßzunahme, weil das bei der anodischen Oxidation gebildete Aluminiumoxid mehr Raum einnimmt. Die Maßänderungen sind aber kontrollierbar, weil sie streng mit der Dicke der gebildeten Schicht zusammenhängen. Es ist also möglich, die Rohteile mit einem gewissen Untermaß zu fertigen, aus dem dann durch die Erzeugen einer Oxidschicht bei einer bestimmten Dicke der Oxidschicht ein genau maßhaltiges Fertigteil entsteht.

Vorteilhaft weist die anodisch erzeugte Oxidschicht eine Dicke von etwa 200 µm auf.

Durch die Eigenschaft der Aluminiumoxid-Schicht, sehr schlecht elektrisch leitend zu sein, wird bei einer Mischbauweise Aluminium/Stahl zusätzlich noch erreicht, daß Kontaktkorrosion zwischen metallischen Bauteilen verschiedenen Material mit unterschiedlicher Stellung in der elektrischen Spannungsreihe weitestgehend ausgeschlossen ist. Auch in dem vorteilhaften Fall, da sowohl Gehäuse 1 als auch funktionelle Teile wie Hauptsteuerkolben 3, Druckwaagekolben 6 und dergleichen aus einer Aluminium-Knetlegierung hergestellt werden, ist dies von Bedeutung, weil beispielsweise Federn, die auf derartige funktionelle Teile wirken und/oder sich am Gehäuse 1 abstutzen, reyelmaßig aus Stahl hergestellt sind.

Beim Gehäuse 1 erfüllt die durch die anodische Oxidation erzeugte Schicht gleich mehrere Anforderungen. Auf den außen liegenden Oberflächenpartien erfüllt die erzeugte Schicht die Funktion des Schutzes vor Korrosion in gleicher Weise wie die Funktion der optisch-ästhetischen Präsentation. Auf das meist angewendete Lackieren der Oberfläche kann so unter Umständen sogar verzichtet werden. Wenn aber gleichwohl eine Lackierung erwünscht ist, so bietet die anodisch erzeugte Oxidschicht einen ausgezeichneten Haftgrund, so daß die bei Werkstücken aus Aluminium-Werkstoffen in der Regel nötige und besonders aufwendige Haftgrund-Vorbereitung und Grundierung entfallen kann.

Bei den Oberflächen die inneren Hohlräume und Kammern wie Kammer 5 für den Hauptsteuerkolben 3 und Kammer 8 für den Druckwaagekolben 6 tritt neben dem Schutz vor Korrosion vor allem der Verschleißschutz in den Vordergrund. Es hat sich gezeigt, daß Hochdruck-Hydraulikventile der zuvor geschilderten Bauweise mit den erfindungsgemäßen Merkmalen und den als vorteilhaft erkannten, durch anodische Oxidation erzeugten Schichten außerordentlich verschleißfest sind. Sie sind herkömmlichen Ventilen in ihrer Lebensdauer nicht unterlegen.

Als besonders auffällig hat sich herausgestellt, daß die Hysterese eines solchen Hochdruck-Hydraulikventils kleiner ist als bei herkömmlichen Ventilen. Diese verminderte Hysterese wirkt sich sehr vorteilhaft aus hinsichtlich der Positioniergenauigkeit bei hydraulischen Stellorganen und ebenso hinsichtlich von Beschleunigungs- und Verzögerungsvorgängen. Das dynamische Verhalten wird also deutlich verbessert.

Das vorstehend geschilderte Ausführungsbeispiel betrifft eine bestimmte Ausführungsform eines Hochdruck-Hydraulikventils. Bei anderen Bauarten von Hochdruck-Hydraulikventilen haben die funktionellen Teile zum Teil andere Bezeichnungen. Unter den funktionellen Teilen sind entsprechend auch diese abweichenden Teile mit zu verstehen, beispielsweise Ventilkörper, Ventilkegel, Steuer- und Regelkolben und so weiter.

Das Gehäuse 1 kann, ohne den Bereich der Erfindung zu verlassen, auch aus einer vergütbaren Aluminium-Gußlegierung hergestellt sein, wobei die Herstellung eines Rohlings des Gehäuses 1 durch Gießen erfolgt. Die allgemeine Lehre der Erfindung ist also, daß das Gehäuse 1 aus einer vergütbaren Aluminium-Legierung hergestellt ist. Die anodische Oxidation ist auch bei Anwendung einer Aluminium-Gußlegierung in gleicher

Weise vorteilhaft durchführbar.

## Patentansprüche

1. Hochdruck-Hydraulikventil zur Beeinflussung des Stroms eines Hydrauliköls zwischen einer Pumpe und einer hydraulischen Last mit einem wenigstens eine Kammer (5, 8) aufweisenden Gehäuse (1) und mindestens einem in dieser Kammer (5, 8) bewegbaren funktionellen, auf den Strom des Hydrauliköls Einfluß nehmenden Teil wie Kolben (3, 6) oder Ventilkörper, **dadurch gekennzeichnet, daß** das Gehäuse (1) aus einer vergütbaren Aluminium-Legierung besteht.

2. Hydraulikventil gemäß Anspruch 1, **dadurch gekennzeichnet, daß** die inneren und äußeren Oberflächen des Gehäuses (1) verschleiß- und korrosionsschützend anodisch oxidiert sind.

3. Hydraulikventil gemäß Anspruch 1 oder 2, **dadurch gekennzeichnet, daß** das mindestens eine bewegbare funktionelle, auf den Strom des Hydrauliköls Einfluß nehmende Teil wie Kolben (3, 6) oder Ventilkörper aus einer vergütbaren Aluminium-Knetlegierung besteht.

4. Hydraulikventil gemäß Anspruch 3, daß die Oberfläche des Kolbens (3, 6) oder Ventilkörpers verschleiß- und korrosionsschützend anodisch oxidiert ist.

5. Hydraulikventil gemäß Anspruch 2 oder 4, **dadurch gekennzeichnet, daß** die Dicke der anodisch erzeugten Oxidschicht etwa 200 um beträgt.

6. Verfahren zur Herstellung eines Hydraulikventils gemäß Anspruch 1, **dadurch gekennzeichnet, daß** die Vergütung von Gehäuse (1) und gegebenenfalls der funktionellen Teile wie Ventilkörper und Kolben (3, 6) durch Wärmebehandlung vor der Formgebung durch spanabhebende Verfahren erfolgt.

## Claims

1. High-pressure hydraulic valve for controlling the flow of a hydraulic oil between a pump and a hydraulic load, comprising a housing (1) having at least one chamber (5, 8) and at least one functional part movable in this chamber (5, 8) and having an influence on the flow of the hydraulic oil, such as a piston (3, 6) or valve body, **characterised in that** the housing (1) consists of an aluminium alloy that can be quenched and tempered.

2. Hydraulic valve according to claim 1, **characterised in that** the inner and outer surfaces of the housing (1) are anodised in order to protect against wear and corrosion.

3. Hydraulic valve according to claim 1 or claim 2, **characterised in that** the at least one movable functional part having an influence on the flow of the hydraulic oil, such as a piston (3, 6) or valve body consists of an aluminium wrought alloy that can be quenched and tempered.

4. Hydraulic valve according to claim 3, **characterised in that** the surface of the piston (3, 6) or valve body is anodised in order to protect against wear and corrosion.

5. Hydraulic valve according to claim 2 or claim 4, **characterised in that** the thickness of the anodically produced oxide layer is approximately 200 µm.

6. Process for the production of a hydraulic valve according to claim 1, **characterised in that** the quenching and tempering of the housing (1) and possibly the functional parts, such as valve body and piston (3, 6), is effected by means of heat treatment prior to shaping by machining.

## Revendications

1. Soupape hydraulique haute pression pour influer sur l'écoulement d'un liquide hydraulique entre une pompe et une charge hydraulique, avec un boîtier (1) présentant au moins un compartiment (5, 8) et avec au moins un élément: fonctionnel mobile dans ce compartiment (5, 8) et influant sur l'écoulement du liquide hydraulique, comme des pistons (3, 6) ou des corps de soupape, **caractérisée en ce que** le boîtier (1) est constitué d'un alliage d'aluminium apte au traitement de trempe et revenu.

2. Soupape hydraulique selon la revendication 1, **caractérisée en ce que** les surfaces intérieures et extérieures du boîtier (1) sont soumises à une oxydation anodique afin de les protéger contre l'usure et contre la corrosion.

3. Soupape hydraulique selon la revendication 1 ou 2, **caractérisée en ce que** le ou les éléments fonctionnels mobiles, influant sur l'écoulement du liquide hydraulique, comme des pistons (3, 6) ou des corps de soupape, sont constitués d'un alliage corroyé d'aluminium apte au traitement de trempe et revenu.

4. Soupape hydraulique selon la revendication 3, **caractérisée en ce que** la surface du piston (3, 6) ou du corps de soupape est soumise à une oxydation anodique afin de la protéger contre l'usure et contre la corrosion.

5. Soupape hydraulique selon la revendication 2 ou 4, **caractérisée en ce que** l'épaisseur de la couche d'oxyde produite par oxydation anodique est d'environ 200 µm.

6. Procédé de fabrication d'une soupape hydraulique selon la revendication 1, **caractérisé en ce que** le traitement de trempe et revenu du boîtier (1) et le cas échéant des éléments fonctionnels tels que corps de soupape et pistons (3, 6) s'effectue par traitement thermique avant le façonnage par enlèvement de matière.
